Europäisches Patentamt

European Patent Office

Office européen des brevets

(11) Numéro de publication: **0 110 775**
**B1**

(12) **FASCICULE DE BREVET EUROPEEN**

(45) Date de publication du fascicule du brevet: **02.09.87**

(21) Numéro de dépôt: **83402253.5**

(22) Date de dépôt: **22.11.83**

(51) Int. Cl.⁴: **H 02 J 9/06, G 05 F 1/56**

(54) **Régulateur à faible tension de déchet.**

(30) Priorité: **30.11.82 FR 8220046**

(43) Date de publication de la demande:
**13.06.84 Bulletin 84/24**

(45) Mention de la délivrance du brevet:
**02.09.87 Bulletin 87/36**

(84) Etats contractants désignés:
**DE FR GB IT NL**

(56) Documents cités:
**DE-A-3 044 658**
**DE-B-2 941 546**
**GB-A-2 061 642**
**US-A-4 342 922**
**US-A-4 354 118**

(73) Titulaire: **THOMSON-CSF**
**173, Boulevard Haussmann**
**F-75379 Paris Cedex 08 (FR)**

(72) Inventeur: **Moreau, Jean-Michel**
**THOMSON-CSF SCPI 173, bld Haussmann**
**F-75379 Paris Cedex 08 (FR)**

(74) Mandataire: **Guérin, Michel et al**
**THOMSON-CSF SCPI 19, avenue de Messine**
**F-75008 Paris (FR)**

Courier Press, Leamington Spa, England.

EP 0 110 775 B1

**Description**

La présente invention concerne un régulateur de tension à faible tension de déchet associable à une source d'alimentation susceptible d'être momentanément interrompue.

La présente invention trouve notamment ses applications dans le domaine de l'électronique automobile. En effet, on tend actuellement de plus en plus à utiliser des microprocesseurs dans les automobiles pour la commande ou la fourniture d'informations. Ces microprocesseurs nécessitent une tension d'alimentation stable, par exemple 5 volts à 0,25 volt près. Or, les batteries d'automobiles qui fournissent normalement une tension de l'ordre de 12 à 14 volts peuvent, dans certaines circonstances, par exemple lors de démarrages à froid, se trouver fortement déchargées et fournir des tensions faibles, par exemple seulement 5,5 volts. D'autre part, l'environnement électrique d'un moteur d'automobile est fortement parasité et l'on peut trouver dans les circuits des surtensions importantes allant jusqu'à 120 volts en valeur de crête positive et négative. Quand il s'agit d'une valeur de crête négative, cela signifie en fait que l'alimentation est interrompue. Heureusement, ces durées d'interruption sont brèves, tout au plus de l'ordre de quelques millisecondes.

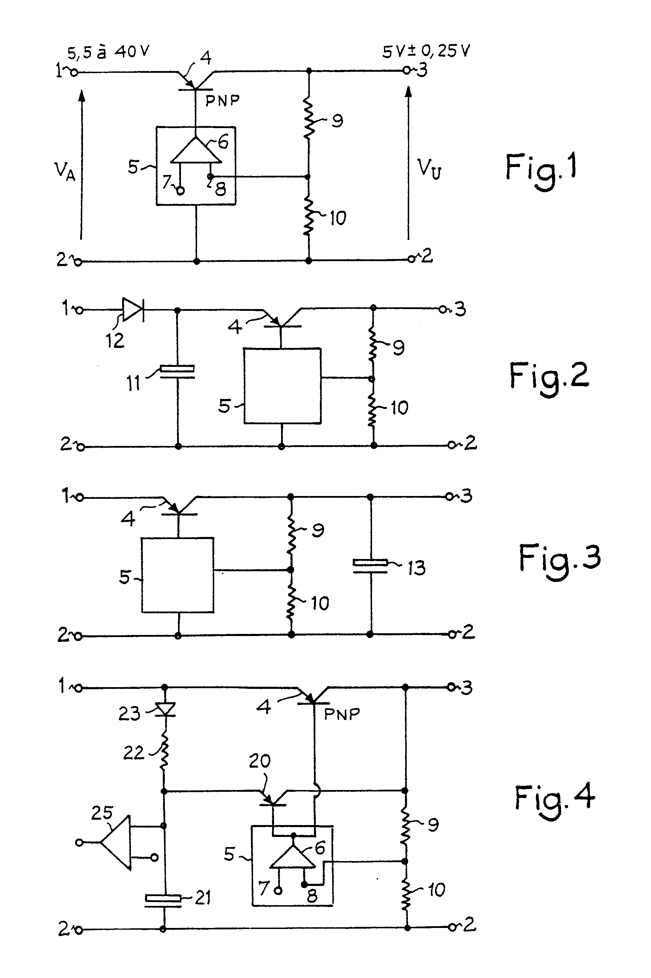

La figure 1 représente un exemple simple de régulateur à faible tension de déchet. Ce régulateur qui reçoit une tension d'alimentation $V_A$ entre ses bornes d'entrée 1 et 2, par exemple en provenance d'une batterie, fournit une tension d'utilisation $V_U$ entre ses bornes de sortie 3 et 2, par exemple pour un microprocesseur. Il comprend essentiellement un transistor PNP 4 dont l'émetteur est relié à la borne d'entrée 1 et le collecteur à la borne de sortie 3. La base du transistor PNP 4 est alimentée par un circuit 5 de commande de régulation. Ce circuit 5 comprend par exemple un amplificateur différentiel 6 recevant, d'une part, une tension de référence sur sa première borne d'entrée 7 et, d'autre part, sur sa deuxième borne d'entrée 8, un signal en provenance d'un point diviseur 9, 10 traduisant la tension présente entre les bornes de sortie 3 et 2. Quand la tension d'utilisation doit par exemple être de 5 volts, la tension d'alimentation peut descendre à une valeur de 5 volts+$V_{CEsat}$, $V_{Cesat}$ étant la chute de tension collecteur-émetteur à la saturation du transistor PNP et pouvant être de l'ordre de 0,4 à 0,5 volt si la tension de base est convenable. Ainsi, la différence entre la tension d'utilisation et la tension d'alimentation minimale, c'est-à-dire la tension de déchet du régulateur, est nettement inférieure à un volt, même en tenant compte des pertes dans les fils électriques.

On va maintenant examiner comment on peut garder les avantages de faible chute de tension de ce régulateur à transistor PNP tout en permettant un maintien de la tension d'utilisation pendant de brèves chutes de la tension d'alimentation endessous de la valeur de seuil.

Les figures 2 et 3 représentent, avec les mêmes références que celles utilisées en figure 1 pour des éléments analogues, des tentatives effectuées dans l'art antérieur pour atteindre ce but.

Dans le cas de la figure 2, un condensateur réservoir 11 est placé entre les bornes d'alimentation 1 et 2 et une diode 12 empêche ce condensateur de se décharger vers l'alimentation. Ainsi, dès que la tension entre les bornes 1 et 2 chute momentanément, le condensateur prend le relais et alimente le circuit. Ce schéma fonctionne bien, avec des valeurs raisonnables de la capacité du condensateur 11, quand la source d'alimentation est normalement à niveau élevé et chute temporairement, par exemple pendant quelques millisecondes à des valeurs faibles. Mais, cette configuration ne permet pas à la tension d'alimentation de rester pendant des durées relativement longues à des valeurs proches de la tension d'utilisation. En effet, la chute de tension en fonctionnement normal entre les bornes 1 et 3 comprend, comme précédemment, la chute de tension collecteur-émetteur à la saturation du transistor PNP 4 ($V_{CEsat}$), mais il faut ajouter à cette valeur la chute de tension dans la diode 12, couramment de l'ordre de 0,6 à 0,8 volt, ce qui donne un total supérieur à un volt.

Pour éviter cet inconvénient, on a proposé le schéma de la figure 3 dans lequel un condensateur réservoir 13 est placé entre les bornes d'utilisation. Dans ce cas, le fonctionnement normal est satisfaisant puisque l'on retrouve alors comme différence de potentiel entre les bornes d'alimentation 1 et 3 la seule chute de tension collecteur-émetteur du transistor 4. Mais, le condensateur réservoir 13 est alimenté normalement sous la tension d'utilisation. Donc, nécessairement, dès que la tension d'alimentation est interrompue, la tension entre le bornes d'utilisation diminue. On souhaite par exemple que cette tension ne puisse pas chuter de plus que de 0,25 volt. Un calcul simple montre dans des cas pratiques que, pour ce faire, si les interruptions de tension doivent durer quelques millisecondes, on atteint des valeurs du condensateur prohibitives pour une consommation normale de circuit intégré, par exemple de l'ordre de 150 milliampères.

Ainsi, l'art antérieur nous enseigne que les régulateurs à condensateur réservoir présentent l'un ou l'autre de deux inconvénients: ou bien la tension de déchet (différence minimale entre la tension d'alimentation et la tension d'utilisation) est trop élevée, ce qui est le cas de la structure de la figure 2, ou bien il faut prévoir des condensateurs de valeur extrêmement élevée qui sont coûteux, encombrants et présentent de mauvaises caractéristiques de dérive thermique (cas de la figure 3).

A titre d'exemple, le brevet GB 061 642 montre un régulateur d'architecture similaire à celle de la figure 3, à l'exception du fait que le condensateur est remplacé par une batterie rechargeable qui est encore beaucoup plus coûteuse qu'un gros condensateur.

Ainsi, un objet de la présente invention est de prévoir un circuit de régulateur à faible tension de déchet et à condensateur réservoir évitant les deux inconvénients précédents.

Pour atteindre cet objet ainsi que d'autres, la présente invention prévoit un régulateur de tension associable à une source d'alimentation principale susceptible d'atteindre des valeurs très proches de la tension régulée désirée et même d'être momentanément interrompue, ce régulateur possèdant un condensateur réservoir jouant le rôle de source d'alimentation auxiliaire rechargeable ainsi qu'un premier transistor PNP connecté par son émetteur à la source d'alimentation principale, fournissant sur son collecteur la tension régulée désirée et recevant sur sa base une tension de commande de régulation, ce régulateur étant caractérisé en ce qu'il comporte un deuxième transistor PNP dont le collecteur est relié à celui du premier, dont la base reçoit la tension de commande, et dont l'émetteur est relié d'une part à l'émetteur du premier transistor par l'intermédiaire d'un moyen de charge tel qu'une résistance, et d'autre part à la masse par l'intermédiaire du condensateur réservoir. Ce régulateur peut en outre comprendre des moyens pour fournir un signal d'inhibition quand le condensateur est insuffisamment chargé ou qu'un délai minimal ne s'est pas écoulé après l'application de la tension d'alimentation.

Ces caractéristiques et avantages ainsi que d'autres de la présente invention seront exposés plus en détail dans la description suivante d'un mode de réalisation particulier faite en relation avec les figures jointes parmi lesquelles:

—les figures 1 à 3 illustrent des régulateurs de l'art antérieur,

—les figures 4 à 6 illustrent divers modes de réalisation d'un régulateur selon la présente invention.

Dans toutes ces figures, de mêmes références désignent des éléments similaires.

Dans le circuit de la figure 4, qui illustre un mode de réalisation de la présente invention, on retrouve les éléments portant les références 1 à 10 déjà représentés en figure 1. Outre ces éléments, il est prévu un deuxième transistor PNP 20 semblable au transistor 4, c'est-à-dire nécessitant sensiblement la même commande de base et pouvant laisser passer le même courant d'utilisation. Ce transistor 20 est relié par son collecteur au collecteur du transistor 4 et est alimenté par sa base de la même façon que le transistor 4. L'émetteur du transistor 20 est relié à une borne d'un condensateur réservoir 21, cette borne étant également reliée à la borne d'alimentation 1 par l'intermédiaire d'un moyen de charge, constitué par exemple d'un résistance 22. Si nécessaire, il est également prévu un moyen d'isolement constitué par exemple d'une diode 23, mais généralement le condensateur réservoir n'aura pas le temps de se décharger notablement au cours de brèves interruptions de tension.

Le fonctionnement du circuit de la figure 4 est le suivant. Si la tension d'alimentation à la borne 1 est suffisante, le circuit fonctionne comme celui de la figure 1 et le transistor 20 n'est pas conducteur. Pendant cette phase de fonctionnement normal, le condensateur réservoir 21 se charge. Ensuite, si la tension d'alimentation chute et que la tension sur l'émetteur du transistor 20 devient supérieure à la tension à l'émetteur du transistor 4, c'est ce transistor 20 qui se met à conduire et qui décharge le condensateur réservoir 21 dans le circuit d'utilisation. Ensuite, à chaque instant, c'est celui des transistors 4 et 20 qui présente la tension d'émetteur la plus élevée qui sera à l'état conducteur.

Cette disposition permet un fonctionnement durable avec des tensions d'alimentation très proches de la tension d'utilisation et permet d'utiliser un condensateur 21 de dimensions raisonnables dans le cas où, à partir d'une tension d'alimentation moyenne, par example 12 à 14 volts, de brèves interruptions de tension se produisant. Par exemple, si la tension d'alimentation normale du condensateur 21 est de 13,5 volts, que la consommation du circuit d'utilisation est de 150 milliampères (0,15 A) et sa tension d'utilisation de 5 volts, en choisissant une valeur de 47 microfarads pour le condensateur 21, la durée pour que la tension chute de 14 volts à 5,5 volts, soit de 8,5 volts, est:

$$T = C \cdot V/I = 47 \cdot 10^{-6} \cdot 8{,}5/0{,}15 = 2{,}66 \text{ ms,}$$

c'est-à-dire que, si la tension de batterie était de 14 V, on peut supporter une interruption d'alimentation de près de 3 ms sans que la tension d'utilisation aux bornes du microprocesseur ne change.

D'autre part, dans le cas où le circuit d'utilisation est un microprocesseur, il est généralement utile d'inhiber son fonctionnement dans les quelques instants qui suivent la mise sous tension. Pour cela, on peut se servir du condensateur 21 comme élément d'un circuit de temporisation propre à fournir un signal d'inhibition tant que la charge aux bornes de ce condensateur est insuffisante. Pour ce faire, on peut prévoir un comparateur 25 recevant sur une borne la tension aux bornes du condensateur 21, sur une autre borne une tension de référence et fournissant en sortie un signal d'inhibition.

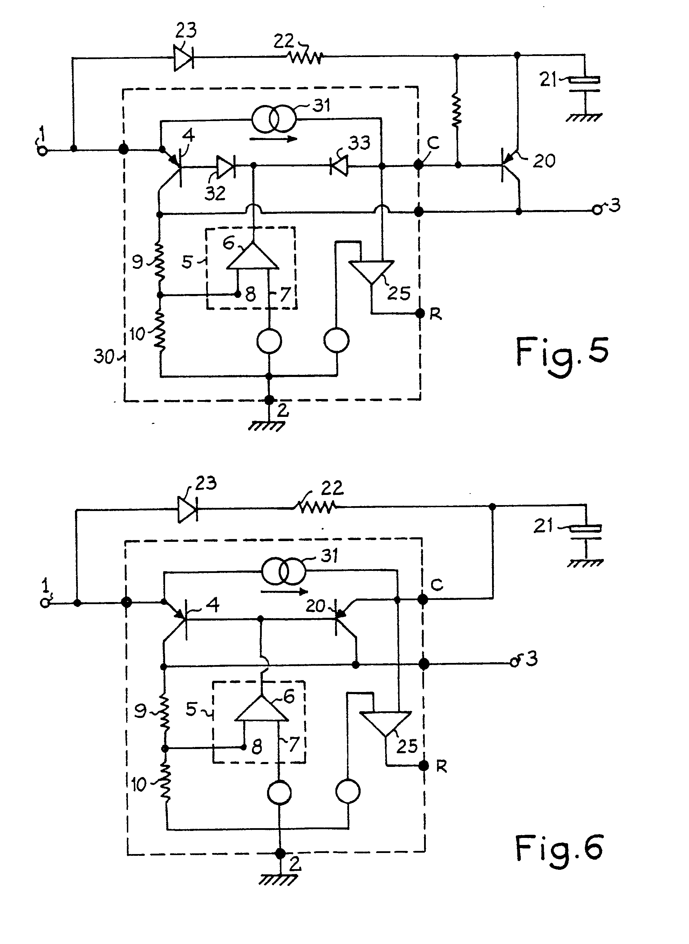

Des modes de réalisation particuliers de la présente invention dans lesquels on détaille les éléments faisant partie d'un circuit intégré et ceux externes à ce circuit intégré, sont illustrés dans les figures 5 et 6. Ces circuits sont quelquefois un peu plus complexes qu'il ne serait nécessaire dans le but de limiter le nombre des bornes de connexion. En effet, dans un circuit intégré, le coût de la prévision d'une borne supplémentaire est bien supériure au coût de la prévision de quelques transistors supplémentaires. Par contre, on tiendra compte du fait que les transistors PNP sont particulièrement coûteux à réaliser sous forme de circuit intégré avec les technologies usuelles. Par exemple, un transistor PNP de 500 milliampères occupe une surface d'environ 2 mm² de silicium alors que le reste du circuit qui sera exposé ci-après en relation avec la figure 5 n'occupe qu'une surface d'approximativement 0,5 m². Toutefois, il est souhaitable que le transistor PNP principal, désigné précédemment par la référence 4, soit réalisé sous forme de circuit intégré car les transistors PNP réalisés sous forme intégrée peuvent supporter des tensions négatives parasites plus importantes que les éléments discrets usuels.

Ainsi, la figure 5 représente un mode de réalisation de la présente invention remplissant notamment toutes les fonctions du circuit de la figure 4 plus quelques fonctions supplémentaires qui seront exposées ci-après. On retrouve bien dans le circuit de la figure 5 les bornes d'entrée et de sortie 1 à 3, le transistor PNP 4, l'ensemble 5 à 10 de régulation (on a en outre figuré sous forme d'un cercle la source de tension de référence pour la régulation). On retrouve également le second transistor PNP 20, le condensateur réservoir 21, sa résistance de charge 22 et la diode d'isolement 23. Les autres éléments du circuit sont destinés à pouvoir le faire fonctionner selon différentes configurations.

Si l'on utilise seulement les éléments figurés à l'intérieur du cadre en pointillés 30, ceci constitue un ensemble d'éléments intégrables correspondant à un régulateur à faible tension de déchet et permettant de fournir un signal de remise à zéro. Pour cette fonction, il est prévu une source de courant 31 et un comparateur 25 ainsi que deux diodes d'isolement 32 et 33. Si l'on n'utilise pas le deuxième transistor selon la présente invention, mais que l'on branche directement le condensateur 21 à la borne d'accès C du circuit intégré, au moment de l'application d'une tension à la borne 1, la source de courant charge à courant constant le condensateur 21, c'est-à-dire que l'on obtient à l'entrée du comparateur 25 une tension égale à la tension de référence seulement après un retard prédéterminé. On obtient donc à la borne R de sortie du comparateur 25 un signal de temporisation.

On peut aussi brancher l'ensemble des éléments 20 à 23 illustrés pour retrouver un fonctionnement du type de celui décrit précédemment en relation avec la figure 4. Ainsi, le circuit de la figure 5 décrit un circuit intégré réalisable en pratique et permettant d'assurer diverses fonctions selon les voeux d'un utilisateur. On notera que ce circuit intégré ne comprend que cinq bornes d'accès.

La figure 6 représente un autre mode de réalisation de la présente invention dans lequel les deux transistors PNP 4 et 20 sont réalisés dans le même circuit intégré. Ceci est économiquement possible à l'heure actuelle quand on n'envisage pas des puissances trop importantes, les transistors PNP ayant alors des dimensions réduites, par exemple dans le cas des exemples pris précédemment où le circuit est destiné à alimenter un microprocesseur ne demandant pas plus de 150 milliampères de courant d'alimentation.

Le circuit de la figure 6 comprend les mêmes cinq bornes d'accès que celui de la figure 5, à savoir les bornes d'entrée et sortie 1, 2, 3, la borne C destinée à être reliée au condensateur et la borne de fourniture de signal d'inhibition R. On retrouve à l'intérieur du circuit intégré, outre les deux transistors PNP 4 et 20, le comparateur 5 et le comparateur 25 avec leurs sources de tension de référence et les résistances 9 et 10. Il est également prévu une source de courant de faible valeur 31 connectée entre les bornes 1 et C, dont le rôle sera exposé ci-après.

En fonctionnement normal, on connecte le condensateur réservoir 21, la résistance de charge 22 et la diode d'isolement 23 comme exposé précédemment, et l'on obtient toutes les fonctions annoncées précédemment: régulateur à faible tension de déchet, possibilité de maintien de la tension d'utilisation en cas de coupure de la tension d'alimentation, fourniture d'un signal de temporisation à la borne R.

Si un utilisateur ne souhaite pas bénéficier de la possibilité de pallier à de brèves coupures de la tension d'alimentation en maintenant la possibilité de disposer d'un signal de temporisation, il pourra ne pas utiliser et connecter la résistance 22 et la diode 23 et utiliser seulement un condensateur 21 de faible valeur. La temporisation à la mise en service est assurée par la charge du condensateur 21 par la source de courant 31. A titre d'exemple numérique, la source de courant peut être de 15 microampères et le condensateur 21 de 0,1 microfarad dans ce cas, alors que le condensateur réservoir doit avoir une valeur de 47 microfarads, par exemple, et donc être chargé par un courant 470 fois plus important pour assurer la même temporisation.

D'autre part, dans le cas du circuit de la figure 6, si l'on veut augmenter la puissance disponible à la borne 3 et que l'on n'envisage pas le cas où la tension chute momentanément en-dessous d'une valeur de seuil, la borne C peut être connectée à la borne 1. Les deux transistors PNP 4 et 20 fonctionnement alors en parallèle et la puissance du circuit est doublée. Bien entendu, dans ce cas, comme l'on n'a pas branché le condensateur 21, le signal disponible à la borne R n'a plus de signification.

## Revendications

1. Régulateur de tension associable à une source d'alimentation principale (1) susceptible d'atteindre des valeurs très proches de la tension régulée désirée et même d'être momentanément interrompue, ce régulateur possèdant un condensateur réservoir (21) jouant le rôle de source d'alimentation auxiliaire rechargeable ainsi qu'un premier transistor PNP (4) connecté par son émetteur à la source d'alimentation principale (1), fournissant sur son collecteur la tension régulée désirée et recevant sur sa base une tension de commande de régulation, ce régulateur étant caractérisé en ce qu'il comporte un deuxième transistor PNP (20) dont le collecteur est relié à celui du premier, dont la base reçoit la tension de commande, et dont l'émetteur est relié d'une part à l'émetteur du premier transistor par l'intermédiaire d'un moyen de charge tel qu'une résistance (22), et d'autre part à la masse par l'intermédiaire du condensateur réservoir.

2. Régulateur selon la revendication 1, caractérisé en ce qu'un moyen d'isolement, tel qu'une diode d'isolement (23), est connecté en série avec le moyen de charge.

3. Régulateur selon la revendication 1, caractérisé en ce qu'il comprend en outre des moyens (25) pour fournir un signal d'inhibition quand le condensateur (21) est insuffisamment chargé.

4. Régulateur selon la revendication 3, caractérisé en ce que lesdits moyens pour fournir un signal d'inhibition comprennent un comparateur (25) comparant la tension sur le condensateur (21) à une tension de référence.

5. Régulateur selon la revendication 4, caractérisé en ce que lesdits moyens pour fournir un signal d'inhibition comprennent en outre des moyens pour charger à courant constant le condensateur (21).

6. Régulateur selon la revendication 5, caractérisé en ce qu'il comprend dans un même circuit intégré le transistor PNP (4), ses moyens d'alimentation de base (5 à 10), une source de courant (31) et comparateur (25) fournissant un signal d'inhibition.

7. Régulateur selon la revendication 6, caractérisé en ce qu'il comprend en outre, dans le même circuit intégré, le deuxième transistor PNP (30).

## Patentansprüche

1. Spannungsregler, welcher einer Hauptversorgungsquelle (1) zugeordnet werden kann, die Werte annehmen soll, welche sehr nahe bei der gewünschten geregelten Spannung liegen, und auch kurzzeitig unterbrochen werden kann, wobei dieser Regler einen Speicherkondensator (21) aufweist, der die Funktion einer wiederaufladbaren Hilfsversorgungsquelle erfüllt, und einen ersten PNP-Transistor (4) aufweist, der mit seinem Emitter an die Hauptversorgungsquelle (1) angeschlossen ist und an seinem Kollektor die gewünschte geregelte Spannung abgibt, sowie an seiner Basis eine Regelsteuerspannung empfängt, wobei dieser Regler dadurch gekennzeichnet ist, daß er einen zweiten PNP-Transistor (20) aufweist, dessen Kollektor mit dem des ersten verbunden ist, dessen Basis die Steuerspannung empfängt und dessen Emitter einerseits mit dem Emitter des ersten Transistors über eine Ladeeinrichtung wie einen Widerstand (22) und andererseits über den Speicherkondensator mit Masse verbunden ist.

2. Regler nach Anspruch 1, dadurch gekennziechnet, daß eine Isoliereinrichtung wie eine Trenndiode (23) in Reihe mit der Ladeeinrichtung geschaltet ist.

3. Regler nach Anspruch 1, dadurch gekennzeichnet, daß er ferner Mittel (25) umfaßt, um ein Sperrsignal abzugeben, wenn der Kondensator (21) unzureichend aufgeladen ist.

4. Regler nach Anspruch 3, dadurch gekennzeichnet, daß die Mittel zum Liefern eines Sperrsignals einen Komparator (25) umfassen, welcher die Spannung am Kondensator (21) mit einer Referenzspannung vergleicht.

5. Regler nach Anspruch 4, dadurch gekennzeichnet, daß die Mittel zum Liefern eines Sperrsignals ferner Mittel zum Laden des Kondensators (21) mit konstantem Strom umfassen.

6. Regler nach Anspruch 5, dadurch gekennzeichnet, daß er in derselben integrierten Schaltung den PNP-Transistor (4), seine Basisansteuermittel (5 bis 10), eine Stromquelle (31) und einen das Sperrsignal liefernden Komparator (25) umfaßt.

7. Regler nach Anspruch 6, dadurch gekennzeichnet, daß er ferner in derselben integrierten Schaltung den zweiten PNP-Transistor (30) umfaßt.

## Claims

1. Voltage controller capable of being associated with a main supply source (1) susceptible of reaching values very close to the desired controlled voltage, and even to be momentarily interrupted, this controller having a storing capacitor (21) having the function of an auxiliary rechargeable supply source, and a first PNP transistor (4) having its emitter connected to the main supply source (1) and its collector supplying the desired controlled voltage, its base receiving an adjustment control voltage, this controller being characterized in that it comprises a second PNP transistor (20) the collector of which is connected to that of the first, the base of which receives the control voltage and the emitter of which is connected, on the one hand, to the emitter of the first transistor through charging means such as a resistor (22), and, on the other hand, to ground through the storing capacitor.

2. Controller according to claim 1, characterized in that an insulating means such as an insulating diode (23) is connected in series with the charging means.

3. Controller according to claim 1, characterized in that it further comprises means (25) for supplying an inhibiting signal when the capacitor (21) is insufficiently charged.

4. Controller according to claim 3, characterized in that said means for supplying an inhibiting signal comprise a comparator (25) comparing the voltage on the capacitor (21) with a reference voltage.

5. Controller according to claim 4, characterized in that said means for supplying an inhibiting signal further comprise means for constant current charging of the capacitor (21).

6. Controller according to claim 5, characterized in that it comprises in the same integrated circuit the PNP transistor (4), its base feeding means (5 to 10), a current source (31) and the comparator (25) supplying an inhibiting signal.

7. Controller according to claim 6, characterized in that it further comprises the second PNP transistor (30) in the same integrated circuit.

5,5 à 40 V      5 V ± 0,25 V      Fig.1

Fig.2

Fig.3

Fig.4

Fig.5

Fig.6